# EUROPEAN PATENT SPECIFICATION

(11) **EP 2 263 348 B1**
(45) Date of publication and mention of the grant of the patent: **27.06.2018**
(21) Application number: 08745200.9
(22) Date of filing: 07.04.2008
(51) Int. Cl.: H04L 29/06, H04L 9/00, H04L 9/32, G06F 21/62

(54) **METHOD AND SYSTEM FOR DISPLAYING VERIFICATION INFORMATION INDICATORS FOR A NON-SECURE WEBSITE**
VERFAHREN UND SYSTEM ZUM ANZEIGEN VON VERIFIKATIONSINFORMATIONSINDIKATOREN FÜR EINE NICHTSICHERE WEBSITE
PROCÉDÉ ET SYSTÈME POUR AFFICHER DES INDICATEURS D'INFORMATIONS DE VÉRIFICATION POUR UN SITE INTERNET NON SÉCURISÉ

(43) Date of publication of application: 22.12.2010
(73) Proprietor: Abdulhayoglu, Melih, Jersey City, NJ 07310 (US)
(72) Inventor: Abdulhayoglu, Melih, Jersey City, NJ 07310 (US)
(74) Representative: Appleyard Lees IP LLP
(86) International application number: PCT/US2008/059525
(87) International publication number: WO 2009/126134

(56) References cited:
- WO-A1-2008/025137
- US-A1- 2006 021 031
- US-A1- 2006 021 031
- US-A1- 2006 218 403
- US-A1- 2006 288 274
- US-B1- 6 324 648
- US-B1- 6 510 464

## Description

### TECHNICAL FIELD

The present invention relates to providing website information indicators to users browsing non-secure websites.

### BACKGROUND

When an Internet user accesses an Internet site (often referred to as a web site) it is often difficult to determine how confident the user should be of the bona fides of the site and site provider. To help assure consumers, third parties will often offer digital security indicators that indicate a secure connection has been established.

Generally, when a consumer wishes to engage a site in a secure transaction, the site is accessed via a SSL/TLS connection. The site being connected to has a digital certificate that provides the data necessary to make secure connection along with important verification information. The information provided and the security assurance given depends on the quality of the digital certificate used. Document US 2006/0218403 discloses a system and method for presenting security information about a current site or communications session. A browsing software is configured to receive a certificate during a negotiation of a secure session between a local device and a remote device. The certificate includes security information about a site maintained at the remote device. The security information is displayed to a user of the browsing software in a meaningful fashion to allow the user to make a trust determination about the site. Displaying the security information may include presenting a certificate summary that includes the most relevant information about the certificate, such as the name of the owner of the site and the name of the certificating authority of the certificate.

Before a secure connection is established, browsers check the authenticity and validity of the certificate being used. This generally includes checking the expiration date of the certificate, who provided the certificate, and whether or not the certificate has been revoked by the provider. If the certificate is valid and authentic, the secure connection will be established and the consumer may conduct the transaction with assurance that the data they are providing is secure.

A browser visiting a site that can be verified or authenticated by a digital certificate will often indicate the presence of the digital certificate to the user by revealing some form of visual or audio security indicator. The presence of the security indicator lets the consumer know that the transaction being conducted is secure. Often users, when accessing the site, will see a pictorial representation of verification or have the border of the browser change colors.

This is useful as the security indicators tell consumers that their transactions may be conducted through a secure connection. The downside of this is that the security indicators are only shown once the SSL/TLS connection has been established. May users abandon their transactions prior to this point, fearing that a lack of a secure connection might result in the theft of their sensitive data.

Recently a new type of certificate has been developed called extended validation (EV) SSL certificates. These certificates are the next generation in Internet security as they require rigorous authentication of a business's identity. Merchants using EV SSL certificates must undergo a vetting process that requires the issuing certificate authority to validate company details, such as the legal status, registration number, and address and phone number of the company, prior to issuance.

Users benefit from these new certificates because of the heightened authentication. Users can be assured that a site containing an EV SSL certificate is a legitimate business. A web browser visiting a site that has an EV SSL certificate relays the heightened assurance to the user by modifying the web browser's appearance. One common display modification is to turn the address bar of the web-browser green and display important verification information next to the web address of the site visited for sites that are using EV SSL certificates.

Unfortunately, this enhanced authentication is only shown at the checkout or secure portion of the website. This means that EV Certificates have the same problems as many SSL Certificates. Many customers lose trust in a website prior to accessing the secure portion of the site resulting in abandoned transactions and a loss of potential revenue. This especially hurts small businesses who don't have the name recognition that other bigger companies enjoy. This is a concern for online business because of the significant increase in the number of identity thefts occurring each year and the increasing cunning of internet fraudsters.

In some aspects, merchants using EV Certificate are even more adversely affected than merchants with standard SSL certificates as consumers don't have any indication that an EV Certificate exists until the secured connection is initiated. This means that site owners who have met the rigors of EV validation and have purchased the enhanced security have no way of indicating to users browsing their site that they include the added assurance that an EV Certificate provides prior to the commencement of the secure connection.

To prevent users from losing trust in online businesses and help prevent customer abandonment resulting from fear of identity theft, a method is needed to indicate to browsing consumers that a website can be trusted prior to their initiation of a secured transaction. The level of security offered by a website is information that needs to be provided to consumers early on during their browsing experience. Waiting until they enter the secure portion of a site is too late. Preferably, digital certificate information should be available as the first time a user navigates to the site.

### SUMMARY

The invention is defined in the independent claims. Particular embodiments are set out in the dependent claims. The invention disclosed teaches that information indicators regarding a site's digital certificate may be used on a non-secure or http site to inform consumers that a corresponding secure site exists. The method works by retrieving the URL of a visited web site. Once the URL is known, a secure connection can be established using SSL/TLS to the secured version of the domain name. If a secure connection cannot be established (such as the https port being closed or when a secure version of the domain doesn't exist), the browser can be modified to display security indicators that alert the user that their shopping experience may not be safe. Thus, a plug-in can be used to display an information indicator relating security assurances on a browser navigating to a non-secure site without a corresponding secured site to alert the user that a secure version of the site does not exist.

If a secure version of the site does exist, a plug-in can be instructed to download the digital certificate associated with the site. The certificate can then be examined by the plug-in. The examination can consist of comparing the thumbprint of the certificate to a thumbprint stored in a secured database on a trusted third-party site, certificate chaining, and time validation. If the thumbprint matches what is stored in the database and the other validation procedures pass, then the site is considered secure and appropriate information indicators are provided. Further comparisons (such as comparing various certificate fields or other certificate information stored in both the certificate and the database) can be used to ensure that the certificate is both authentic and associated with the correct site. Any certificate checks or assurances described herein can be used in tandem with each other to achieve a high level of authentication assurance.

In the simplest embodiment of the invention, a plug-in can check a database to see if the visited site has a corresponding site that is secured by a digital certificate. If so (or if not), the visual indicators are displayed. More advanced embodiments (such as the thumbprint check described previously) are preferred to provide greater security to the consumer. Further, the method is especially useful with EV Certificates as these certificates have undergone rigorous validation procedures. With EV Certificates, the method can be used to let users know that the site being visited has been verified as a valid Internet presence that may be transacted with safely.

Alternatively, the plug-in software can perform a typical certificate validation procedure on the downloaded certificate to determine whether the site is secure. This can be done by tracing the path of a certificate downloaded from the secure site to a root certificate stored in any typical certificate storage location (such as the browser, the operating system, or in the plug-in software itself). If the path exists, the plug-in can alert that the secure portion of the site has a digital certificate. The plug-in or the browser itself will then display the appropriate security indicators. These security indicators can be enhanced by the plug-in to provide different levels of assurance on the non-secure (http) site. Different information indicators can be displayed depending on the type of certificate found on the secured site and the certificate's life-cycle status (i.e., whether the certificate is revoked or expired).

Information indicators can be anything that provides assurance to the consumer that the secured version of the site is a safe place to conduct transactions. Common information indicators include a visual modification of the web browser, an audio alert, or a new pop-up window displaying the security message. For example, when a secured site has an EV Certificate, the border of the screen can be turned green to reflect the added level of security available.

The information indicators used by the plugin can either be set by the browser or selected by the user. Allowing the user to select the information indicators greatly enhances the security of the method because it further prevents fraudsters from fraudulently displaying information indicators to the user. Examples include allowing the user to select which color to display or what audio sound should be used to alert the consumer that a non-secure http site has a secure counterpart.

### BRIEF DESCRIPTION OF THE FIGURES

FIG. 1a depicts a diagram of one embodiment of the present invention.
FIG. 1b shows a flowchart of an embodiment of a method of showing information indicators on a non-secure site.
FIG 2 shows a flowchart of an alternate embodiment of a method of showing information indicators on a non-secure site.
FIG 3 shows a flowchart of an alternate embodiment of a method of showing information indicators on a non-secure site.
FIG 4 shows a flowchart of an alternate embodiment of a method of showing information indicators on a non-secure site.
FIG 5 shows a flowchart of how a method of showing information indicators on a non-secure site can be used with registry entries to track multiple browser windows or tabs.

### DETAILED DESCRIPTION

Some of the embodiments described hereinafter are not embodiments of the invention according to the claims. The following description includes specific details in order to provide a thorough understanding of the present invention and methods of using it. The skilled artisan will understand, however, that the system and methods described below can be practiced without employing these specific details. Indeed, they can be modified and can be used in conjunction with products and techniques known to those of skill in the art in light of the present disclosure.

Reference in the specification to "one embodiment" or "an embodiment" means that a particular feature, structure, or characteristic described in connection with the embodiment is included in at least one embodiment. The appearance of the phrase "in one embodiment" in various places in the specification are not necessarily all referring to the same embodiment. The term certificate means a digital certificate.

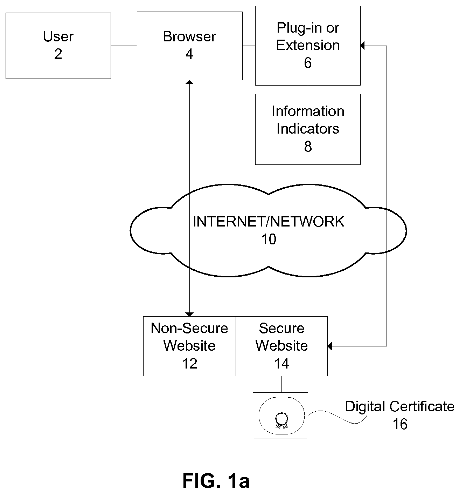

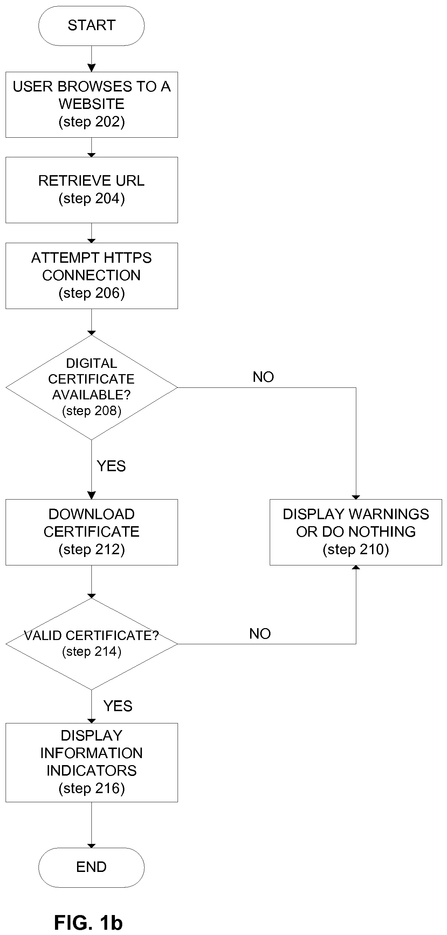

Figure 1a and 1b depict one embodiment of the structure of the invention. Figure 1b is a flowchart of the embodiment of the invention. In step 202, the user 2 uses a browser 4 to navigate over the internet or network 10 to a non-secure website 12. This can be an internet store site, a government site, or any other site that user might visit. Typically the user is a consumer that will be visiting the website via the Internet (over http) and is looking to complete a commercial transaction. The user 2 could also be simply browsing the internet or window shopping. Further, the site 12 does not necessarily have to be located on the internet, and the user could be browsing an intranet or simply examining potential sites on their own network.

In Step 204, the URL of the website 12 being visited is retrieved using any conventional method. Such methods include, but are not limited to, retrieving the URL directly through the browser, by using web-based scripting, or by utilizing a software plug-in. A browser extension or plug-in that performs the URL retrieval is useful as it can be used to perform all of the other steps in the method and can simplify the implementation of the invention. The terms plug-in and browser extension are used interchangeably for the purposes of this patent as either may be used in all cases. An independent browser can also be created that incorporates the method, and it should be recognized that such an independent browser is the same as having a plug-in or browser extension included in an existing browser.

In Step 206, a plug-in 6 attempts to connect to the domain using HTTPS (SSL/TLS on port 443). As mentioned above, the plug-in can be, but is not required to be, the same as the feature that retrieves the URL of the website. The plug-in's 6 attempt to connect over HTTPS initiates a secured connection with the secured version of the site 14 being visited. The request to connect securely to the HTTPS site can be initiated automatically by the plug-in 6 or a separate set of code or may be initiated manually by the user 2 by clicking a button or some similar activity. Automatic initiation by the plugin 6 is advantageous as it requires less input from the user 2.

The plug-in's 6 attempt to initiate a secured connection with the secure site 14 prompts the download of the digital certificate 16 associated with the secure site 14, if the secure site 14 exists (Step 208). The data in the digital certificate is used to encrypt the data for the public key certificate and negotiate the key to be used in the session encryption. The secure session must be established by completing a successful TLS/SSL handshake for the establishment of the session key. Establishing the secure connection proves the ownership of the provate key and, thus, authenticates the server as the owner of the digital certificate. The digital certificate 16 may be downloaded through the browser 4, the plug-in 6 initiating the secure server request, a separate third-party application, a download request from the user 2, or any other standard method of downloading certificates over the internet. The session may be closed immediately after the handshake is complete if desired.

In Step 208, if a digital certificate 16 is not available, the plug-in 6 or download instruction will fail and no certificate will be retrieved. Likewise, if the secure port is not open on the browsing computer and the plug-in or code instruction is unable to connect to the secure site 14, then no certificate will be returned or downloaded. In Step 210, if a digital certificate 16 is not returned then no further actions are taken. In the alternative, an information (or security) indicator 8 is displayed by the plugin 6 or browser 4 to alert the user 2 that the site 12 may not be secured or that the site 12 may be risky to conduct business with. Such security indicators 8 can be anything that lets the user known that a secure version of the site is not available, and might include a red border around the browser or computer screen, an audio warning, or a pop-up message displaying the details of the attempted certificate retrieval routine.

In step 212, if a digital certificate 16 is available, the plug-in 6 retrieves the certificate's information. The downloaded certificate 16 can be examined by the user 2, browser application 4, or plug-in 6 is ensured authentic and valid by completing the typical private key secure connection during the download.

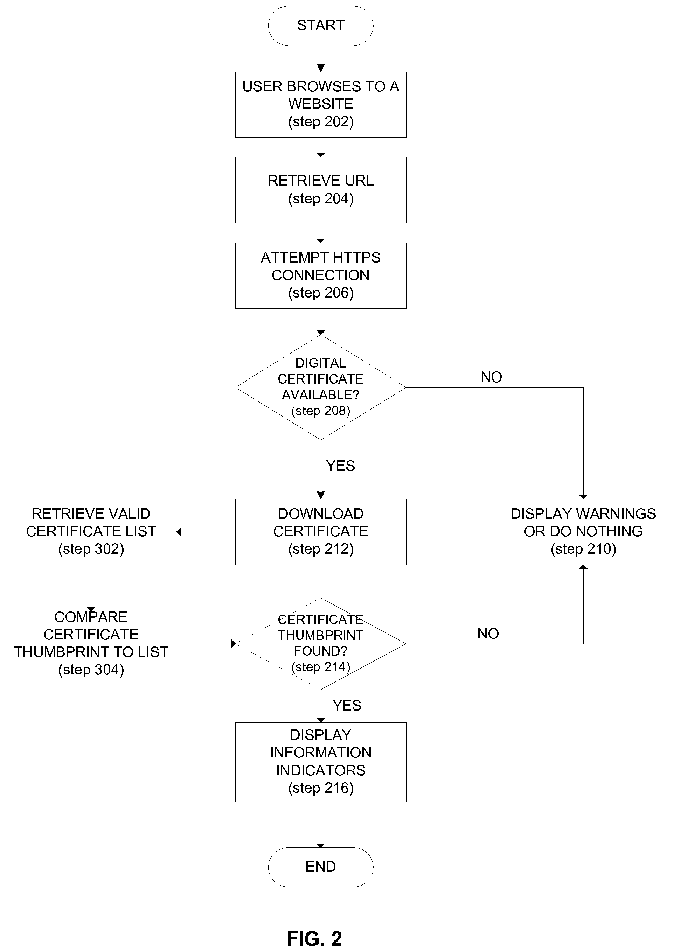

Further in step 214, if a digital certificate 16 is downloaded, a plug-in 6 (preferably the same plug-in that requested the secure connection) checks the certificate's validity 26. As shown in Figure 2, this can be done by checking the certificate's thumbprint against a list of valid certificates to determine whether the certificate qualifies to display information indicators on the non-secure site. The certificate list should be maintained on a separate secured site to ensure its integrity. In a preferred embodiment, the list is signed and contained within a PKCS#7 Cryptographic Message format. The certificate can also be validated using certificate chaining, time validation, checking certificate numbers, etc. All of the typical validation checks can be used in tandem to create an even higher level of security assurance for the user.

During step 214, additional checks of the certificate information can be used to ensure the site's identity and prevent fraudsters from returning false data to the program. Checks can include checking certificate names, file size, and other validated information found in the certificate against entries in a trusted database. The plug-in 6 can then confirm that information in the downloaded certificate is the same as the information in the originally validated certificate. This can also be used to limit information indicators to specific Certification Authority brand certificates or to certificates that meet certain special requirements such as EV vetting.

In step 216, if the certificate 16 passes the desired checks, then the plug-in 6 can display information indicators 8 on the client's web browser 4 while the browser remains navigated to the non-secured site 12. Alternatively, the plug-in 6 can instruct the browser 4 to display the information indicators 8. Different sets of information indicators can be displayed or used to indicate different certificate types. Different certificate indicators can be displayed depending on any of the information retrieved from the certificate, such as certificate issuer, certificate type, and lifecycle status, or the number of verification checks performed on and passed by the certificate during the plug-ins verification process.

During Step 214, the revocation and expiration dates of the downloaded certificate can be checked to ensure that the certificate is still valid. Different information indicators 8 can be used to show that the secured site 14 has a revoked or expired certificate 16 and should not be trusted despite the existence of a digital certificate.

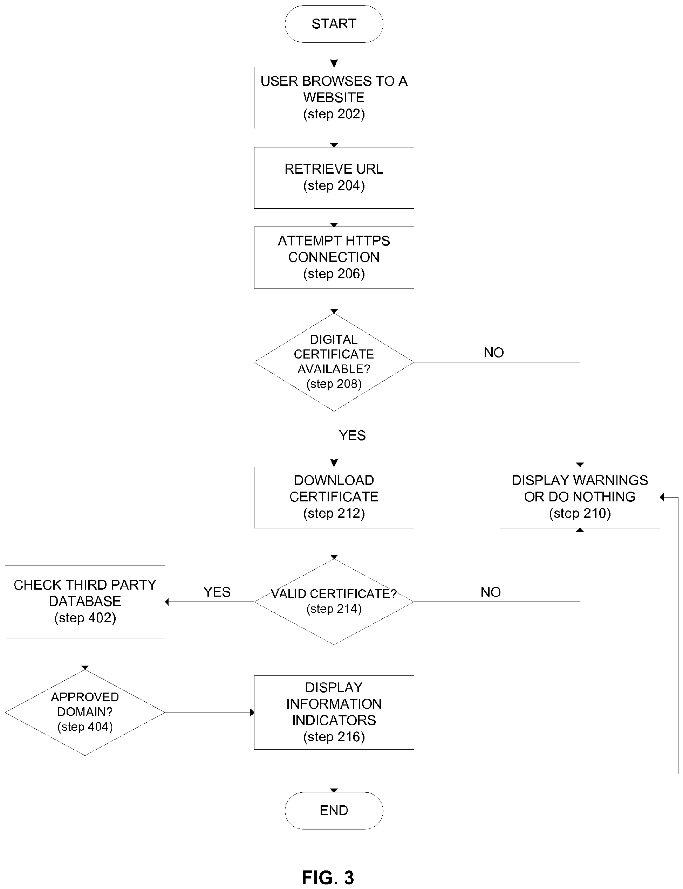

In an alternative embodiment shown in Figure 3, during step 402, a plugin 6 or scripting language can be used to retrieve the website's domain name or address from a database maintained by a trusted source. In Step 404, if the domain name or address of the secure site 14 is found in the database, then the plug-in 6 can be instructed to display the appropriate information indicators 8. Once again, different security indicators can be displayed based on the results of the database query. For example, if the database query results show the site as having an EV certificate, enhanced security indicators can be presented to the user to reflect this fact.

In another embodiment, the plug-in 6 can maintain a (preferably encrypted) list of root certificates and then use standard certificate validation procedures to trace a path from the downloaded certificate up to the root certificate instead of (or in addition to) checking a trusted third-party database for the certificate. If a path can be successfully traced from the downloaded certificate to the root certificate (or vice versa), then the downloaded certificate is considered valid and the information indicators 8 will be displayed for the non-secure site 12. The plug-in 6 can also check the browser's list of stored root certificates or a local or remote cache of certificates to see if a valid path can be traced from the downloaded certificate to a valid root certificate. By checking the certificate path instead of a database on a third-party site, users not connected to the internet can verify non-secure sites on an intranet. Checking local, browser, or plug-in certificate storages can also help reduce internet traffic as additional connections to third-party sites are no longer necessary. This embodiment eliminates the need to re-download certificates from a trusted third-party as the validation can occur using the standard validation procedures with locally accessed information.

The described method is advantageous to users as the entire method can occur automatically when visiting a web site. The browser or plug-in can be configured to automatically retrieve the certificate for each site visited without further input by the user. This can be done by having the plug-in execute on startup of either the operating system or the browser. Once the plug-in is active, the plug-in can examine each page navigated to by the user. The plug automatically reads the URL of each site visited or of the site that is last in focus, retrieves the certificate by establishing an SSL connection, and then automatically determines the validity and authenticity of the certificate retrieved, displaying the security indicators as appropriate. Nothing is required from the user. The method may also be semi-automatic by making any of the steps require manual approval or activation by the user.

In one embodiment, the address bar background color is changed to green if a site has a secure version that contains an EV Certificate. If an EV Certificate does not exist, then information indicators are not displayed by either the plug-in or the browser. Even if a digital certificate is found, a secure connection indicator is not shown on the http site or browser (such as the padlock symbol) to help avoid consumer confusion between secure sites and non-secured sites. It should be noted that information indicators other than colors may be used to show the presence of a digital certificate. Other possibilities include, but are not limited to, other visual displays such as pictures, graphics, or text, or audio warnings. Any information indicator can be used that can be displayed by the browser, scripting code, or plug-in.

Different security indicators can be used to display different levels of trust. For example, a red indicator can be used to indicate that a digital certificate could not be retrieved or that the validation of the certificate failed, a yellow indicator can be used to indicate that a standard SSL certificate is present, and a green indicator can be used to show that an EV certificate was found. Different security indicators help relate to the user the risk of conducting a secured transaction with the particular site. Because the indicators are being displayed on the non-secured site, the user knows that a site can or can't be trusted prior to entering any secured areas and prior to providing any secured information.

Because a plug-in is used, the connection with the secure site is initiated independent of the browser's connection to the site being viewed. Validation of the secured site can be performed independently of the website in focus. This allows users to turn off the method if desired and helps increase the security of the described method by making the code less accessible to potential fraudsters.

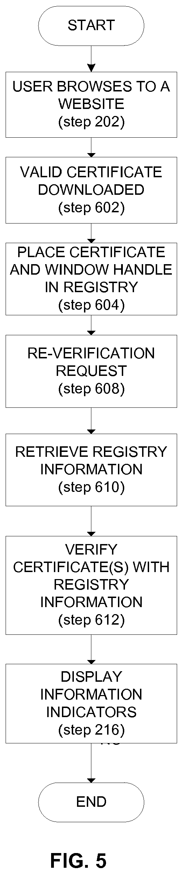

In another embodiment, shown in Figure 5, the plug-in 6 can retrieve the certificate from the secured site (Step 602) and then automatically place the certificate and window handle (identity of the window to which the certificate belongs) in the Registry (Step 604). By itself, a registry entry does not verify the validity of the certificate because it could have been created and displayed independently by a fraudulent web site operator. As the web site is accessed, the plug-in, external software, or html code within the web site itself can direct the plug-in application to verify the digital signature of the secure website as disclosed above. The registry is then updated with certificate and window handle data. In step 608, a reverification request is made. This can be made by the the user, the plug-in application, or by the browser application itself. This can be done by the user by clicking on an icon in the system tray. The plugin application can also be on a timer to automatically activate once the timer expires. The browser application can also contain an instruction to verify the certificate once certain parameters are met (such as a certain amount of time has passed, certain actions have been taken by the user, or any other method of automatically activating code). In Step 610, the plug-in application then checks the registry for all certificate and window handle data. In Step 612, the plug-in application then verifies the digital signature of all certificates identified and verifies that the web-page is indeed associated with a corresponding legitimate secure site. After identifying which certificate belongs to which window, from the window handle data, the plug-in application displays the appropriate authentication indicators (Step 216). Doing this allows the user to have multiple browser windows or tabs open, each displaying its own information indicators. This embodiment also allows the system to continuously check the certificate's validity and presence to prevent hijacked browser sessions.

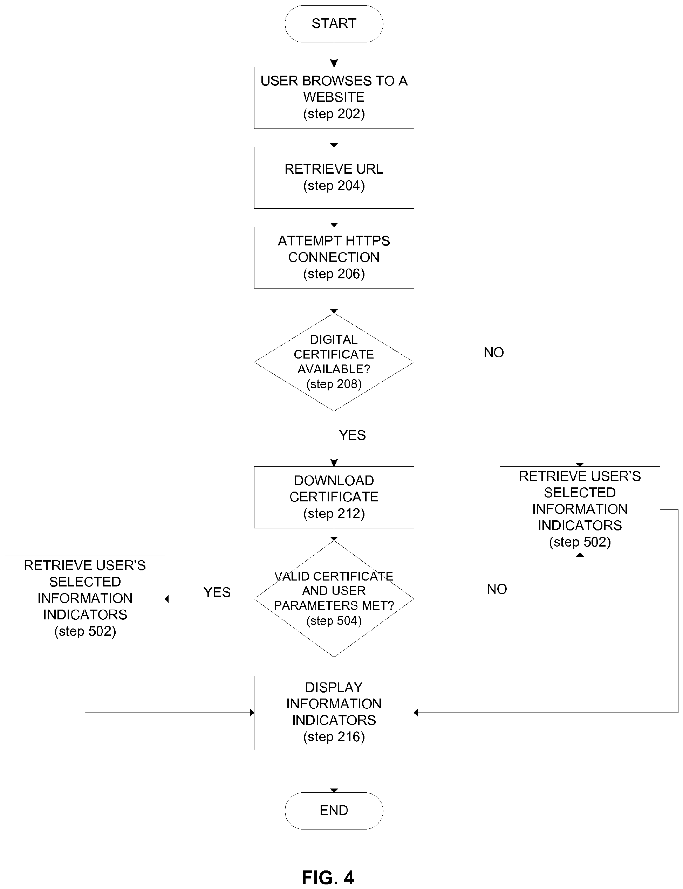

In a further embodiment shown in Figure 4, several information indicator options are built into the plug-in software. The user can then select which information indicators should be displayed depending on the digital certificate information associated with the secure site. Alternatively, as shown in step 504, the user can configure the plugin to show only indicators if certain security parameters are met (i.e. the certificate has not been revoked, the certificate is an EV certificate, etc). For example, a user might want to configure the plug-in to display no indicator if a site is lacking a certificate, a certain picture for sites that use a standard SSL certificate, and a flashing border for sites using an EV Certificate. The ability of the user to select these features themselves helps ensure that a fraudster cannot simply paint the security indicators on every site developed in an attempt to deceive the user.

Similar to the above, the plug-in software itself can decide which indicators should be presented to the user. This can be done by having the plug-in software retrieve a trigger from a secure database (either located in the plug-in itself or on a trusted secured site) that instructs the plug-in about which indicators should be displayed for each site visited. In this manner each non-secured site could potentially have its own different method of indicating that a secured version of the non-secure site exists. This helps show sites even more securely as it helps prevent phishing sites from replicating the security indicators. This embodiment can also be used to incorporate company logos or themes into the security indicators. All that needs to be done is store the logo or theme to be displayed in the secure database.

Although the preferred embodiments of the present invention has been described in relation to its implementation on a personal computer platform, other data communication devices can also be utilized.

Connections referred to as being via the Internet can be by other communication methods eg buy a local area network ("LAN") or wide area network ("WAN"). Although the present invention finds particular benefit when used in relation to internet connections, the database of certificates can also be a database and/or application on a user's machine. The plug-in may reside on the user's machine, on a third-party machine, or on a server machine, and may be accessed remotely.

The invention is not restricted to the details of the foregoing embodiments. The invention extend to any novel one, or any novel combination, of the features disclosed in this specification (including any accompanying claims, abstract and drawings), or to any novel one, or any novel combination, of the steps of any method or process so disclosed.

## Claims

1. A method of providing security assurance on a non-secure site (12) comprising
determining the URL of a non-secure site;
requesting a secure connection to the domain associated with the URL;
determining if said non-secure site has a corresponding site (14) that is secured by a digital certificate (16); and
displaying an information indicator in response to the determination of the existence of the digital certificate

2. A method according to claim 1, where the information indicator is displayed if a digital certificate is not associated with the domain.

3. A method according to claim 2, where the information indicator is a change in the color of the border of a browser.

4. A method according to claim 2, where the information indicator is a border encompassing a browser.

5. A method according to claim 2, where the information indicator is an audio indicator.

6. A method according to claim 2, where the information indicator is a modification of a browser's address bar.

7. A method according to claim 2, where the information indicator is a display window that is separate from a browser.

8. A method according to claim 1, where the information indicator is displayed if at least one digital certificate is associated with the domain.

9. A method according to claim 8, where the information indicator is a change in the color of the border of a browser.

10. A method according to claim 8, where the information indicator is a border encompassing a browser.

11. A method according to claim 8, where the information indicator is an audio indicator.

12. A method according to claim 8, where the information indicator is a modification of a browser's address bar.

13. A method according to claim 9, where the information indicator is a display window that is separate from a browser.

14. A method according to claim 1, where the at least one information indicator varies based on the website in the browser.

15. A system for indicating the security of a website (12) comprising
a URL
at least one digital certificate (16)
means for determining the validity of said at least one digital certificate
at least one security information indicator (18) means for determining if said website has a corresponding site that is secured by a digital certificate
means for displaying said at least one security information indicators.

16. A system according to claim 15, where a digital certificate is downloaded from a domain associated with said URL for a corresponding site (14) that is secured by a digital certificate (16).

## Patentansprüche

1. Verfahren zum Bereitstellen einer Sicherheitsgewährleistung ("Security Assurance") auf einer nicht sicheren Seite (12), das Folgendes umfasst:
Bestimmen der URL einer nicht sicheren Seite;
Anfordern einer sicheren Verbindung zu der der URL zugeordneten Domäne;
Bestimmen, ob die nicht sichere Seite über eine entsprechende Seite (14) verfügt, die durch ein digitales Zertifikat (16) gesichert ist; und
Anzeigen eines Informationsindikators als Reaktion auf die Bestimmung des Vorhandenseins des digitalen Zertifikats.

2. Verfahren nach Anspruch 1, wobei der Informationsindikator angezeigt wird, wenn der Domäne kein digitales Zertifikat zugeordnet ist.

3. Verfahren nach Anspruch 2, wobei der Informationsindikator eine Änderung der Farbe des Rands eines Browsers ist.

4. Verfahren nach Anspruch 2, wobei der Informationsindikator ein Rand ist, der einen Browser umgibt.

5. Verfahren nach Anspruch 2, wobei der Informationsindikator ein akustischer Indikator ist.

6. Verfahren nach Anspruch 2, wobei der Informationsindikator eine Modifikation einer Adresszeile eines Browsers ist.

7. Verfahren nach Anspruch 2, wobei der Informationsindikator ein Anzeigefenster ist, das von einem Browser getrennt ist.

8. Verfahren nach Anspruch 1, wobei der Informationsindikator angezeigt wird, wenn der Domäne mindestens ein digitales Zertifikat zugeordnet ist.

9. Verfahren nach Anspruch 8, wobei der Informationsindikator eine Änderung der Farbe des Rands eines Browsers ist.

10. Verfahren nach Anspruch 8, wobei der Informationsindikator ein Rand ist, der einen Browser umgibt.

11. Verfahren nach Anspruch 8, wobei der Informationsindikator ein akustischer Indikator ist.

12. Verfahren nach Anspruch 8, wobei der Informationsindikator eine Modifikation einer Adresszeile eines Browsers ist.

13. Verfahren nach Anspruch 9, wobei der Informationsindikator ein Anzeigefenster ist, das von einem Browser getrennt ist.

14. Verfahren nach Anspruch 1, wobei der mindestens eine Informationsindikator basierend auf der Webseite in dem Browser variiert.

15. System zum Angeben Indizieren der Sicherheit einer Webseite (12), umfassend:
eine URL
mindestens ein digitales Zertifikat (16)
Mittel zum Bestimmen der Gültigkeit des mindestens einen digitalen Zertifikats mindestens einen Sicherheitsinformationsindikator (18)
Mittel zum Bestimmen, ob die Webseite über eine entsprechende Seite verfügt, die durch ein digitales Zertifikat gesichert ist Mittel zum Anzeigen des mindestens einen Sicherheitsinformationsindikators.

16. System nach Anspruch 15, wobei ein digitales Zertifikat von einer Domäne heruntergeladen wird, die der URL für eine entsprechende Seite (14) zugeordnet ist, die durch ein digitales Zertifikat (16) gesichert ist.

## Revendications

1. Procédé pour fournir une assistance de sécurité sur un site non sécurisé (12), consistant à :
déterminer l'URL d'un site non sécurisé ;
demander une connexion sécurisée au domaine associé à l'URL ;
déterminer si ledit site non sécurisé a un site correspondant (14) qui est sécurisé par un certificat numérique (16) ; et
afficher un indicateur d'informations suite à la détermination de l'existence du certificat numérique.

2. Procédé selon la revendication 1, dans lequel l'indicateur d'informations est affiché si un certificat numérique n'est pas associé au domaine.

3. Procédé selon la revendication 2, dans lequel l'indicateur d'informations est un changement de couleur de la bordure d'un navigateur.

4. Procédé selon la revendication 2, dans lequel l'indicateur d'informations est une bordure entourant un navigateur.

5. Procédé selon la revendication 2, dans lequel l'indicateur d'informations est un indicateur audio.

6. Procédé selon la revendication 2, dans lequel l'indicateur d'informations est une modification de la barre d'adresse du navigateur.

7. Procédé selon la revendication 2, dans lequel l'indicateur d'informations est une fenêtre d'affichage qui est distincte d'un navigateur.

8. Procédé selon la revendication 1, dans lequel l'indicateur d'informations est affiché si au moins un certificat numérique est associé au domaine.

9. Procédé selon la revendication 8, dans lequel l'indicateur d'informations est un changement de couleur de la bordure d'un navigateur.

10. Procédé selon la revendication 8, dans lequel l'indicateur d'informations est une bordure entourant un navigateur.

11. Procédé selon la revendication 8, dans lequel l'indicateur d'informations est un indicateur audio.

12. Procédé selon la revendication 8, dans lequel l'indicateur d'informations est une modification de la barre d'adresse du navigateur.

13. Procédé selon la revendication 9, dans lequel l'indicateur d'informations est une fenêtre d'affichage qui est distincte d'un navigateur.

14. Procédé selon la revendication 1, dans lequel l'au moins un indicateur d'informations varie en fonction du site web dans le navigateur.

15. Système pour indiquer la sécurité d'un site web (12), comprenait
un URL ;
au moins un certificat numérique (16) ;
des moyens pour déterminer la validité dudit au moins un certificat numérique ;
au moins un indicateur d'informations de sécurité (18) ;
des moyens pour déterminer si ledit site web a un site correspondant qui est sécurisé par un certificat numérique ;
des moyens pour afficher au moins un indicateur d'informations de sécurité.

16. Système selon la revendication 15, dans lequel un certificat numérique est téléchargé depuis un domaine associé audit URL pour un site correspondant (14) qui est sécurisé par un certificat numérique (16).
